# EUROPÄISCHE PATENTSCHRIFT

(11) **EP 1 117 906 B1**
(45) Veröffentlichungstag und Bekanntmachung des Hinweises auf die Patenterteilung: **08.09.2004**
(21) Anmeldenummer: 99969468.0
(22) Anmeldetag: 20.09.1999
(51) Int. Cl.: F01L 9/04, F02D 41/00, F02D 13/02

(54) **VERFAHREN ZUM STEUERN EINER BRENNKRAFTMASCHINE**
METHOD FOR CONTROLLING AN INTERNAL COMBUSTION ENGINE
PROCEDE PERMETTANT DE COMMANDER UN MOTEUR A COMBUSTION INTERNE

(30) Priorität: 21.09.1998 DE 19843174
(43) Veröffentlichungstag der Anmeldung: 25.07.2001
(73) Patentinhaber: SIEMENS AKTIENGESELLSCHAFT, 80333 München (DE)
(72) Erfinder: HARTKE, Andreas, D-80807 München (DE); TEINER, Markus, D-93057 Regensburg (DE); VOGT, Thomas, D-93049 Regensburg (DE)
(86) Internationale Anmeldenummer: PCT/DE1999/003003
(87) Internationale Veröffentlichungsnummer: WO 2000/017494

(56) Entgegenhaltungen:
- EP-A- 0 152 287
- EP-A- 0 769 613
- EP-A- 0 777 038
- EP-A- 0 854 280
- US-A- 5 765 528

## Beschreibung

Die Erfindung betrifft ein Verfahren zum Steuern einer Brennkraftmaschine gemäß dem Oberbegriff des Patentanspruchs 1.

Es sind Brennkraftmaschinen bekannt mit Stellantrieben, die auf die Gaswechselventile der Zylinder der Brennkraftmaschine einwirken. Die Stellantriebe steuern den Hubbeginn und/oder das Hubende und/oder Hubbetrag der Gaswechselventile und können den Hubbeginn und/oder Hubende und/oder den Hubbetrag entsprechend der Lastanforderungen verändern. Derartige Brennkraftmaschinen haben demnach als Stellglied zum Einstellen der Last die Gaswechselventile statt der Drosselklappe bei konventionellen Luftmassenstrom-geführten Brennkraftmaschinen. Die anzusaugende Luftmasse des jeweiligen Zylinders kann nahezu verlustfrei eingestellt werden.

Ein bekannter Stellantrieb (DE 195 26 683 A1) für Gaswechselventile weist zwei Elektromagnete auf, zwischen denen jeweils gegen die Kraft eines Rückstellmittels eine Ankerplatte durch Abschalten des Spulenstroms an dem haltenden Elektromagneten und Einschalten des Spulenstroms an dem fangenden Elektromagneten bewegt werden kann. Der Spulenstrom des jeweils fangenden Elektromagneten wird auf einen vorgegebenen Fangwert geregelt und zwar während einer vorgegebenen Zeitdauer, die so bemessen ist, daß die Ankerplatte innerhalb der Zeitdauer auf eine Anlagefläche am fangenden Elektromagneten trifft. Anschließend wird der Spulenstrom des fangenden Elektromagneten auf einen Haltewert geregelt.

Die Aufgabe der Erfindung ist es, ein Verfahren zum Steuern einer Brennkraftmaschine mit Ventilantrieben zum Steuern der Gaswechselventile zu schaffen, das zuverlässig und präzise ist.

Die Aufgabe wird erfindungsgemäß durch die Merkmale des unabhängigen Patentanspruchs 1 gelöst. Vorteilhafte Ausgestaltungen der Erfindung sind in den Unteransprüchen gekennzeichnet.

Die Erfindung zeichnet sich dadurch aus, daß die Füllung in einem Zylinder mit einer sehr geringen Ansprechzeit auf Veränderungen der die Last der Brennkraftmaschine repräsentierenden Größe eingestellt werden kann. So ist beispielsweise eine Leerlaufregelung mit hoher Güte möglich. Die die Last repräsentierende Größe kann beispielsweise der Luftmassenstrom, das Drehmoment oder die Kraftstoffmasse sein.

Ausführungsbeispiele der Erfindung sind anhand der schematischen Zeichnungen näher erläutert. Es zeigen:
- Figur 1: eine Brennkraftmaschine,
- Figur 2: ein Ablaufdiagramm eines Programms, das in einer Steuereinrichtung zum Steuern einer Brennkraftmaschine abgearbeitet wird,
- Figur 3: das Ablaufdiagramm eines Programms, das in einer Gaswechselventil-Steuereinrichtung zum Steuern der Gaswechselventile abgearbeitet wird,
- Figur 4: die Abarbeitungsfolge der Schritte der Programme gemäß den Figuren 2 und 3 aufgetragen über einen Kurbelwellenwinkel.

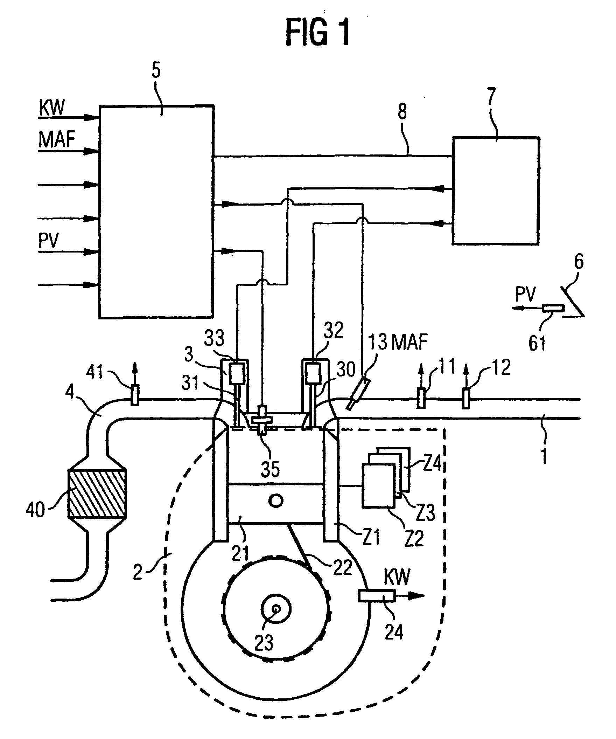

Eine Brennkraftmaschine (Figur 1) umfaßt einen Ansaugtrakt 1 und einen Motorblock 2, der einen Zylinder Z1 und eine Kurbelwelle 23 aufweist. Ein Kolben 21 und eine Pleuelstange 22 sind dem Zylinder Z1 zugeordnet. Die Pleuelstange 22 ist mit dem Kolben 21 und der Kurbelwelle 23 verbunden. Ein Zylinderkopf 3 ist vorgesehen, in dem ein Ventiltrieb angeordnet ist mit mindestens einem Einlaßventil 30 und einem Auslaßventil 31. Jedem der Gaswechselventile, die als Einlaßventil 30 und als Auslaßventil 31 ausgebildet sind, ist ein Ventilantrieb 32, 33 zugeordnet. Die Ventilantriebe 32, 33 steuern den Hubbeginn, die Dauer des Hubes und somit das Hubende und gegebenenfalls den Hubbetrag des jeweiligen Gaswechselventils. Die Ventilantriebe 32, 33 sind vorzugsweise als elektromechanische Antriebe ausgebildet mit mindestens einem Elektromagneten, einem Anker mit einer Ankerplatte, die zwischen einer ersten Anlagefläche des Elektromagneten und einer weiteren Anlagefläche beweglich ist und die mit mindestens einem Rückstellmittel einen Feder-Masse-Schwinger bildet. Durch entsprechendes Bestromen oder Nicht-Bestromen einer Spule des Elektromagneten wird das Gaswechselventil in eine Offenposition oder eine Schließposition gebracht. Die Ventilantriebe 32, 33 können auch elektrohydraulisch oder in einer sonstigen dem Fachmann bekannten Weise derart ausgebildet sein, daß ein zum Einstellen der Last der Brennkraftmaschine ausreichendes Ansprechverhalten des Ventilantriebs 32, 33 gewährleistet ist.

Ein Einspritzventil 13 ist am Ansaugtrakt 1 nahe bei dem Zylinderkopf 3 angeordnet. In dem Zylinderkopf 3 ist ferner eine Zündkerze 35 eingebracht. Das Einspritzventil 13 kann alternativ auch so in dem Zylinderkopf 3 angeordnet sein, daß der Kraftstoff direkt in dem Brennraum des Zylinders Z1 zugemessen wird. Neben dem Zylinder Z1 umfaßt die Brennkraftmaschine noch weitere Zylinder Z2, Z3 und Z4, denen entsprechende Ein- und Auslaßventile, Ventilantriebe, Einspritzventile und Zündkerzen zugeordnet sind.

Ein Abgastrakt 4 mit einem Katalysator 40 und einer Sauerstoffsonde 41 ist der Brennkraftmaschine zugeordnet. Eine Steuereinrichtung 5 ist vorgesehen, der Sensoren zugeordnet sind, die verschiedene Meßgrößen erfassen und jeweils den Meßwert der Meßgröße ermitteln. Die Steuereinrichtung 5 ermittelt abhängig von mindestens einer Meßgröße Stellsignale zum Steuern des Einspritzventils 13 und der Zündkerze 35 und Ventilsteuerzeiten VSZ_EX, VSZ_IN für das Auslaßventil 31 und das Einlaßventil 30.

Die Sensoren sind ein Pedalstellungsgeber 61, der eine Pedalstellung PV des Fahrpedals 6 erfaßt, ein Luftmassenmesser 11, der einen Luftmassenstrom MAF erfaßt, ein Temperatursensor, der eine Ansauglufttemperatur erfaßt, und ein Kurbelwellenwinkelgeber, der einen Kurbelwellenwinkel KW erfaßt, aus dessen zeitlichen Verlauf in der Steuereinrichtung 5 die Drehzahl N der Kurbelwelle 23 berechnet wird. Ferner ist eine Sauerstoffsonde 41 vorgesehen, die den Restsauerstoffgehalt des Abgases in dem Abgastrakt 4 erfaßt und die diesem eine Luftzahl LAM zuordnet. Je nach Ausführungsform der Erfindung kann eine beliebige Untermenge der genannten Sensoren oder auch zusätzliche Sensoren vorhanden sein.

Eine Gaswechselventil-Steuereinrichtung 7 ist vorgesehen die über einen Bus 8 mit der Steuereinrichtung 5 kommuniziert. Die Gaswechselventil-Steuereinrichtung 7 erzeugt abhängig von den Ventilsteuerzeiten VSZ_EX, VSZ_IN und gegebenenfalls weiteren Meßgrößen, wie z.B. des Stroms in den Ventilantrieben 32, 33, Stellsignale zum Einstellen eines Sollwertverlaufs des Stroms in den Ventilantrieben 32, 33.

Die Steuereinrichtung 5 ist vorzugsweise als elektronische Motorsteuerung ausgebildet. Sie kann jedoch auch mehrere Steuergeräte umfassen, die elektrisch miteinander verbunden sind, so z.B. ein Bussystem. Die Steuereinrichtung 5 und die Gaswechselventil-Steuereinrichtung 7 können alternativ auch in einem einzigen Steuergerät angeordnet sein.

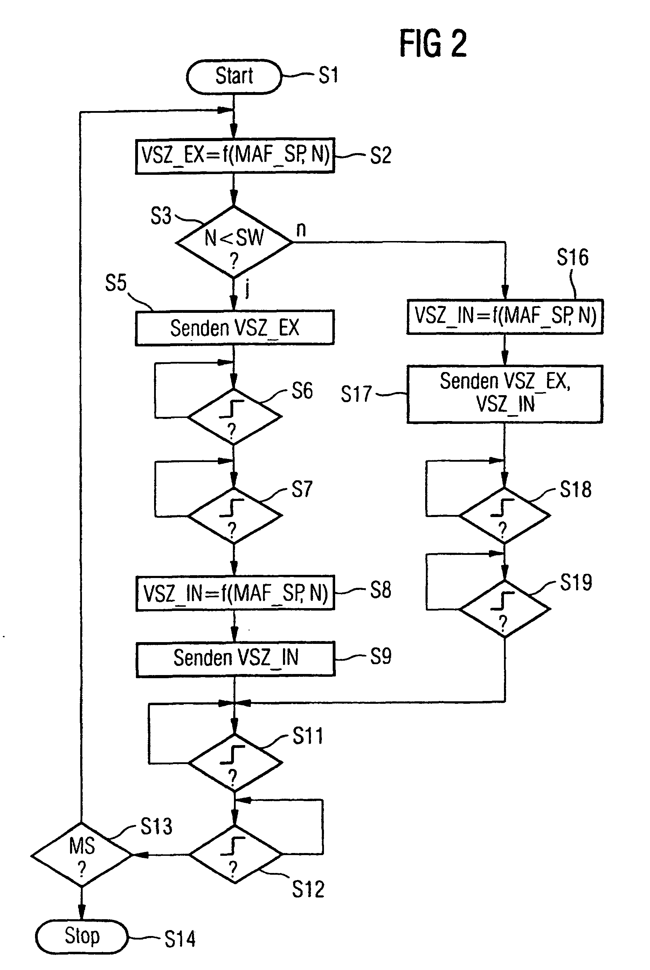

Ein Programm (Figur 2) zum Steuern der Brennkraftmaschine wird in der Steuereinrichtung 5 abgearbeitet und ist dort gespeichert. Das Programm wird in einem Schritt S1 gestartet. In einem Schritt S2 wird eine Ventilsteuerzeit VSZ_EX für das Auslaßventil 31 abhängig von einer die Last an der Brennkraftmaschine repräsentierenden Größe ermittelt. Das Ermitteln erfolgt dabei vorzugsweise über eine Kennlinie oder ein Kennfeld. Die die Last an der Brennkraftmaschine repräsentierende Größe ist beispielsweise ein Sollwert MAF_SP des Luftmassenstroms der abhängig von der Fahrpedalstellung, der Drehzahl und gegebenenfalls weiteren Meßgrößen und/oder Anforderungen einer elektronischen Getriebesteuerung, einer Antischlupfregelung ermittelt wird.

In einem Schritt S3 wird geprüft, ob die Drehzahl N kleiner ist als ein Schwellenwert SW. Ist dies der Fall, so wird in einem Schritt S5 die Ventilsteuerzeit VSZ_EX des Auslaßventils über den Bus 8 an die Gaswechselventil-Steuereinrichtung 7 gesendet.

In einem Schritt S6 wird geprüft, ob ein Wechsel des Segments erfolgt ist. Ein Segment ist bestimmt durch den Phasenwinkel zwischen den oberen Totpunkten zweier Kolben von Zylindern Z1 bis Z4, die in der Zündfolge direkt aufeinander folgen. Bei einer Vier-Zylinder-Brennkraftmaschine ist demnach dieser Phasenwinkel 180°, während er bei einer Acht-Zylinder-Brennkraftmaschine 90° beträgt. Ein Segmentwechsel wird abhängig von dem Kurbelwellenwinkel KW erkannt.

Das Verfahren wird in dem Schritt S1 bezogen auf den Kurbelwellenwinkel KW so gestartet, daß die Schritte S2 bis S5 während des Segmentes abgearbeitet werden, in dem der untere Totpunkt UT vor dem oberen Totpunkt ZOT bei Zündung liegt.

Falls in dem Schritt S6 kein Segmentwechsel erkannt wird, so wird die Prüfung nach einer vorgegebenen Wartezeit in dem Schritt S6 fortgesetzt. Andernfalls wird in einem Schritt S7 geprüft, ob ein weiterer Segmentwechsel stattgefunden hat. Ist dies nicht der Fall, so wird die Bearbeitung in dem Schritt S7 wieder fortgesetzt, nachdem die vorgegebene Wartezeit abgelaufen ist. Ist der Segmentwechsel erfolgt, so wird die Bearbeitung in einem Schritt S8 fortgesetzt.

In dem Schritt S8 wird die Ventilsteuerzeit VSZ_IN für das Einlaßventil aus einer Kennlinie oder einem Kennfeld abhängig von der die Last an der Brennkraftmaschine charakterisierenden Größe entsprechend der Vorgehensweise in dem Schritt S2 ermittelt. Der Sollwert MAF_SP, die Drehzahl N und weitere Betriebsgrößen werden mindestens einmal pro Segment erfaßt und demnach aktualisiert, so daß der Sollwert MAF_SP in dem Schritt S8 verschieden sein kann von dem Sollwert MAF_SP des Luftmasenstroms in dem Schritt S2.

In einem Schritt S9 wird dann die Ventilsteuerzeit VSZ_IN über den Bus 8 an die Gaswechselventil-Steuereinrichtung 7 gesendet.

In einem Schritt S11 wird geprüft, ob ein weiterer Segmentwechsel eingetreten ist. Ist die Bedingung des Schritts S11 nicht erfüllt, so wird sie nach einer vorgegebenen Wartezeit erneut geprüft. Ist die Bedingung des Schritts S11 jedoch erfüllt, so wird in einem Schritt S12 erneut geprüft, ob ein Segmentwechsel stattgefunden hat. Ist dies nicht der Fall, so wird nach der vorgegebenen Wartezeit erneut die Bedingung des Schritts S12 geprüft. Ist die Bedingung des Schritts 12 jedoch erfüllt, so wird in einem Schritt S13 geprüft, ob sich die Brennkraftmaschine in einem Betriebszustand des Motorstops MS befindet. Ist dies der Fall, so wird das Programm in dem Schritt S14 beendet. Ist dies jedoch nicht der Fall, so wird die Bearbeitung in dem Schritt S2 fortgesetzt.

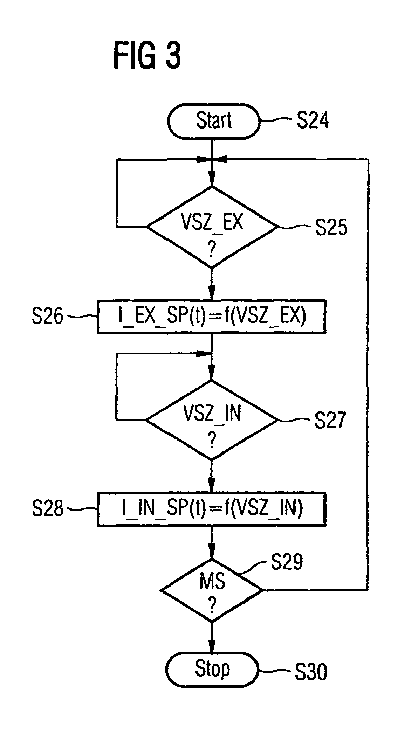

Ein weiteres Programm (Figur 3) zum Steuern der Ein- und Auslaßventile 30, 31 wird in der Gaswechsel-Steuereinrichtung 7 abgearbeitet und ist dort gespeichert. In einem Schritt S24 wird das Programm gestartet. In einem Schritt S25 wird geprüft, ob über den Bus 8 ein neuer Wert der Ventilsteuerzeit VSZ_EX für das Auslaßventil 31 empfangen worden ist. Ist dies der Fall, so wird in einem Schritt S26 ein Sollwertverlauf I_EX_SP(t) des Stroms in dem Ventilantrieb 33 abhängig von der Ventilsteuerzeit VSZ_EX ermittelt. Vorzugsweise wird der Sollwertverlauf I_EX_SP(t) durch Interpolation von Kennfeldwerten ermittelt. Der Sollwertverlauf I_EX_SP(t) wird dann über eine Steuerung oder Regelung und eine Endstufe in dem Ventilantrieb 33 eingestellt.

In einem Schritt S27 wird geprüft, ob die Ventilsteuerzeit VSZ_IN für das Einlaßventil über den Bus 8 empfangen worden ist. Ist dies nicht der Fall, so wird die Bedingung des Schritts S27 nach der vorgegebenen Wartezeit erneut geprüft. Ist die Bedingung des Schritts S27 erfüllt, so wird in einem Schritt S28 ein Sollwertverlauf I_IN_SP(t) des Stroms zum Steuern des Einlaßventils vorzugsweise durch Kennfeld oder Kennlinieninterpolation aus einem Kennfeld abhängig von der Ventilsteuerzeit VSZ_IN für das Einlaßventil 30 ermittelt und über einen Regler oder eine Steuerung und eine Endstufe in dem Ventilantrieb 32 eingestellt. In einem Schritt S29 wird geprüft, ob die Brennkraftmaschine in dem Betriebszustand des Motorstops ist. Ist dies der Fall, so wird das Programm in einem Schritt S30 beendet. Ist dies jedoch nicht der Fall, so wird die Bearbeitung in dem Schritt S25 fortgesetzt.

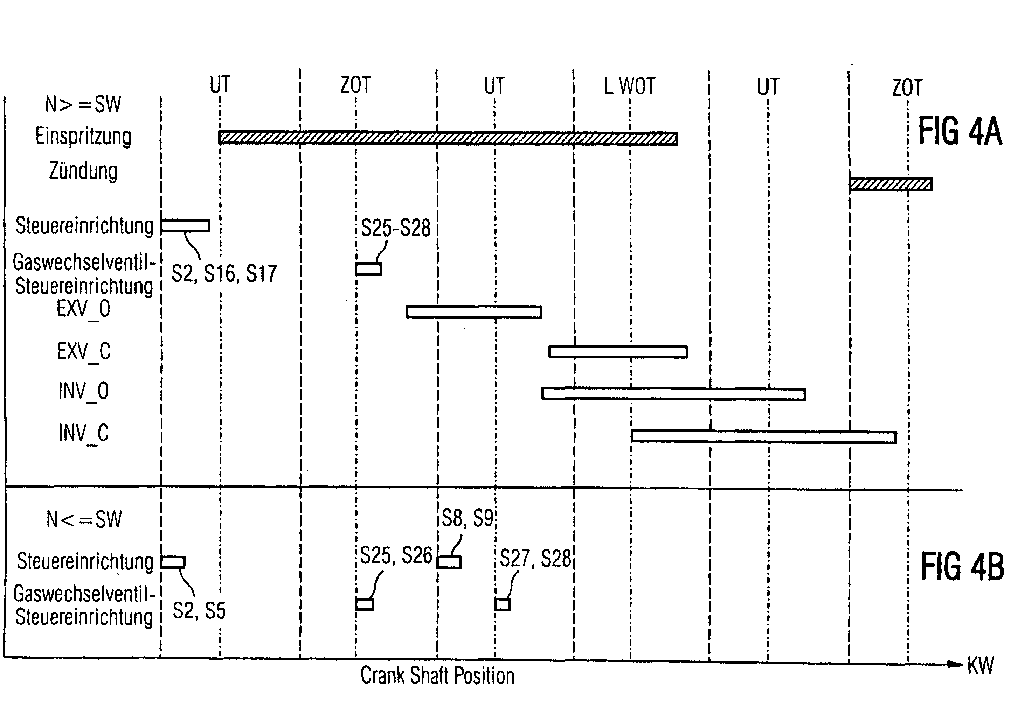

Figur 4a und 4b zeigen den Verlauf der Abarbeitung der Schritte S1 bis S30 gemäß den Figuren 2 und 3 aufgetragen über den Kurbelwellenwinkel KW. UT bezeichnet jeweils den unteren Totpunkt des Kolbens des jeweiligen Zylinders Z1 bis Z4, ZOT den oberen Totpunkt des Kolbens bei der Zündung, LWOT den oberen Totpunkt des Kolbens während des Ladungswechsels, EXV_O den Kurbelwellenwinkelbereich, innerhalb dessen das Öffnen des Auslaßventils erfolgen kann, EXV_C, denjenigen Kurbelwellenwinkelbereich, innerhalb dessen das Schließen des Auslaßventils erfolgen kann, INV_O denjenigen Kurbelwellenwinkelbereich, innerhalb dessen das Öffnen des Einlaßventils 30 erfolgen kann und INV_C denjenigen Kurbelwellenwinkelbereich, innerhalb dessen das Schließen des Einlaßventils erfolgen kann.

In Figur 4a ist der zeitliche Verlauf der Abarbeitung der Schritte S1 bis S30 aufgetragen für eine Drehzahl N größer oder gleich des Schwellenwertes SW. Die Schritte S2, S16 und S17 werden in dem Segment abgearbeitet, in dem der untere Totpunkt UT des Kolbens vor dem oberen Totpunkt ZOT bei Zündung liegt. Durch das direkt aufeinanderfolgende Abarbeiten der Schritte S2, S16 und S17 ist die Rechenbelastung der Steuereinrichtung 5 und die Belastung des Busses 8 geringer als bei der getrennten Berechnung der entsprechenden Schritte S2, S5, S25 und S26, falls die Drehzahl N kleiner ist als der Schwellenwert SW. Ferner werden so die Ventilsteuerzeiten frühzeitig über den Bus versendet.Dadurch ist auch bei hoher Drehzahl N sichergestellt, daß die Ventilsteuerzeiten VSZ_EX, VSZ_IN für das Auslaßventil und das Einlaßventil in Echtzeit berechnet werden können und dann durch die Gaswechelsventil-Steuereinrichtung so frühzeitig eingestellt werden, daß das Auslaßventil oder das Einlaßventil rechtzeitig seine vorgegebene Position erreicht, trotz des vorhandenen Störeinflusses der sogenannten Klebzeit des Ankers an der Anlagefläche eines der Elektromagneten des Ventilantriebs nach Abschalten der Bestromung der entsprechenden Spule und der vorgegebenen Flugzeit des Ankers von einer Anlagefläche zur anderen Anlagefläche.

Die Schritte S25 bis S28 werden in dem Segment abgearbeitet, in dem der obere Totpunkt ZOT bei Zündung liegt. So ist sichergestellt, daß die Sollwertverläufe des Stroms rechtzeitig eingestellt werden können.

Falls die Drehzahl N kleiner ist als der Schwellenwert SW (zum Beispiel kleiner als 2000 U/min), werden gemäß Figur 4b in dem Segment, in dem der untere Totpunkt UT des Kolbens vor dem oberen Totpunkt ZOT bei Zündung liegt, die Schritte S2 und S5 abgearbeitet. In dem Segment, in dem der obere Totpunkt ZOT bei Zündung liegt, werden dann die Schritte S25 und S26 abgearbeitet. So kann der Sollwertverlauf I_SP_EX(t) des Auslaßventils 31 rechtzeitig eingestellt werden.

Die Schritte S8 und S9 werden jedoch erst in dem Segment abgearbeitet, in dem der untere Totpunkt UT des Kolbens liegt nach dem oberen Totpunkt ZOT bei Zündung. So können zum Einstellen der Füllung in dem Zylinder aktuellere Werte der die Last der Brennkraftmaschine repräsentierende Größe, also z.B. der Sollwert MAF_SP oder die Drehzahl N berücksichtigt werden. Die Schritte S27 und S28 werden in demselben Segment abgearbeitet. Somit können unmittelbar vor dem Steuern der Ventilöffnung des Einlaßventils 30 noch Änderungen der die Last repräsentierenden Größe berücksichtigt werden. Dadurch ist eine äußerst geringe Totzeit gewährleistet. Dies ist insbesondere in dem niedrigeren Drehzahlbereich zur Regelung der Drehzahl im Leerlauf ein gewichtiger Vorteil.

## Patentansprüche

1. Verfahren zum Steuern einer Brennkraftmaschine mit mehreren Zylindern, denen jeweils mindestens ein Einlaßventil (30) und ein Auslaßventil (31) zugeordnet sind, mit je einem Ventilantrieb (32,33) zum Steuern des Einlaßventils (30) und des Auslaßventils (31), **dadurch gekennzeichnet, daß** die Ventilsteuerzeit (VSZ_IN) für das Einlaßventil (30) eines Zylinders (Z1) mindestens ein Segment später berechnet wird als die Ventilsteuerzeit (VSZ_EX) für das Auslaßventil (31) desselben Zylinders (Z1), wobei ein Segment bestimmt ist durch den Phasenwinkel zwischen den oberen Totpunkten zweier Kolben von Zylindern (Z1,Z2,Z3,Z4), die in der Zündfolge direkt aufeinander folgen und die Berechnung der Ventilsteuerzeiten für das Einlassventil auf Grund von Daten geschieht, die seit der Berechnung der Ventilsteuerzeiten für das Auslassventil aktualisiert worden sind.

2. Verfahren nach Anspruch 1, **dadurch gekennzeichnet, daß** die Ventilsteuerzeit (VSZ_EX, VSZ_IN) und ein von dieser abhängiges Stellsignal für den Ventilantrieb (32,33) des jeweiligen Einlaßventils (30) in dem gleichen Segment ermittelt werden.

3. Verfahren nach einem der Ansprüche 1 oder 2, **dadurch gekennzeichnet, daß** die Ventilsteuerzeit (VSZ IN) für das Einlaßventil (30) des jeweiligen Zylinders (Z1-Z4) in dem Segment berechnet wird, in dem der untere Totpunkt des Kolbens des Zylinders (Z1-Z4) liegt, der auf den oberen Totpunkt bei Zündung folgt.

4. Verfahren nach einem der vorhergehenden Ansprüche, **dadurch gekennzeichnet, daß** die Ventilsteuerzeiten (VSZ_IN, VSZ_EX) für das Einlaßventil (30) und das Auslaßventil (31) eines Zylinders (Z1-Z4) in jeweils dem gleichen Segment berechnet werden, wenn die Drehzahl (N) größer ist als ein vorgegebener Schwellenwert (SW).

## Claims

1. Method for controlling an internal combustion engine having a plurality of cylinders, to which in each case at least one inlet valve (30) and one outlet valve (31) are assigned, having a valve drive (32) for controlling the inlet valve (30) and a valve drive (33) for controlling the outlet valve (31), **characterized in that** the valve control time (VSZ_IN) for the inlet valve (30) of a cylinder (Z1) is calculated at least one segment later than the valve control time (VSZ_EX) for the outlet valve (31) of the same cylinder (Z1), a segment being determined by the phase angle between the upper dead centres of two pistons of cylinders (Z1, Z2, Z3, Z4) which follow one another directly in the ignition sequence and the valve control times for the inlet valve are calculated on the basis of data which has been updated since the calculation of the valve control times for the outlet valve.

2. Method according to Claim 1, **characterized in that** the valve control time (VSZ_EX, VSZ_IN) and an actuating signal, dependent on it, for the valve drive (32, 33) of the respective inlet valve (30) are determined in the same segment.

3. Method according to one of Claims 1 or 2, **characterized in that** the valve control time (VSZ_IN) for the inlet valve (30) of the respective cylinder (Z1-Z4) is calculated in the segment in which the lower dead centre of the piston of the cylinder (Z1-Z4) which follows the upper dead centre when ignition occurs is located.

4. Method according to one of the preceding claims, **characterized in that** the valve control times (VSZ_IN, VSZ_EX) for the inlet valve (30) and the outlet valve (31) of a cylinder (Z1-Z4) are calculated in each case in the same segment if the rotational speed (N) is higher than a predefined threshold value (SW).

## Revendications

1. Procédé de commande d'un moteur à combustion à plusieurs cylindres, auquel sont associées respectivement au moins une soupape d'admission (30) et une soupape d'échappement (31), comportant chacune une commande de soupape (32, 33) pour commander la soupape d'admission (30) et la soupape d'échappement (31), **caractérisé en ce que** le temps de commande de la soupape (VSZ_IN) pour la soupape d'admission (30) d'un cylindre (Z1) est calculé au moins un segment plus tard que le temps de commande de soupape (VSZ_EX) pour la soupape d'échappement (31) du même cylindre (Z1), au moins un segment étant défini par l'angle de phase entre les points morts supérieurs de deux pistons de cylindres (Z1, Z2, Z3, Z4) qui se succèdent directement dans la série d'allumages et que le calcul des temps de commande de soupape pour la soupape d'admission a lieu sur la base de données qui ont été actualisées depuis le calcul des temps de commande de soupape pour la soupape d'échappement.

2. Procédé selon la revendication 1, **caractérisé en ce que** le temps de commande de soupape (VSZ EX, VSZ lN) et un signal de réglage dépendant de celui-ci pour la commande de soupape (32, 33) de la soupape d'admission respective (30) sont déterminés dans le même segment.

3. Procédé selon l'une quelconque des revendications 1 ou 2, **caractérisé en ce que** le temps de commande de soupape (VSZ IN) pour la soupape d'admission (30) du cylindre respectif (Z1-Z4) est calculé dans le segment dans lequel se trouve le point mort inférieur du piston du cylindre (Z1-Z4) qui succède au point mort supérieur lors de l'allumage.

4. Procédé selon l'une quelconque des revendications précédentes, **caractérisé en ce que** les temps de commande de soupape (VSZ IN, VSZ EX) pour la soupape d'admission (30) et pour la soupape d'échappement (31) d'un cylindre (Z1-Z4) sont calculés dans respectivement le même segment lorsque le régime (N) est plus grand qu'une valeur seuil (SW) prédéfinie.
